# EUROPEAN PATENT SPECIFICATION

(11) **EP 2 022 297 B1**
(45) Date of publication and mention of the grant of the patent: **09.06.2010**
(21) Application number: 06744018.0
(22) Date of filing: 26.05.2006
(51) Int. Cl.: H05B 41/288, H05B 41/38

(54) **HIGH INTENSITY DISCHARGE LAMP BALLAST**
VORSCHALTGERÄT FÜR EINE HOCHINTENSITÄTS-ENTLADUNGSLAMPE
BALLAST DE LAMPE À DÉCHARGE À HAUTE INTENSITÉ

(43) Date of publication of application: 11.02.2009
(73) Proprietor: Greenwood Soar IP Limited, Catterall Preston Lancashire PR3 1TQ (GB)
(72) Inventor: SOAR, Steve, Lancashire BL8 1EN (GB); GREENWOOD, Simon, Richard, Crewe CW4 6DG (GB)
(74) Representative: Smith, Peter James
(86) International application number: PCT/GB2006/001952
(87) International publication number: WO 2007/138237

(56) References cited:
- EP-A- 0 984 670
- GB-A- 2 319 677
- GB-A- 2 397 182
- US-A- 4 734 624
- US-A1- 2006 082 330

## Description

### Technical field

This invention relates to an electronic control circuit which is particularly, though not exclusively, suited to the ballasting of low and high pressure sodium, mercury arc and metal halide discharge lamps (high intensity discharge lamps or HID lamps). Typically such systems can be used for highway lighting, architectural floodlighting, warehouse and industrial lighting etc.

### Background of the invention

Fig. 4 is taken from an earlier patent application published as EP-A-0984670, in which the inventors describe a circuit topology with two independent buck converters operable in two modes.

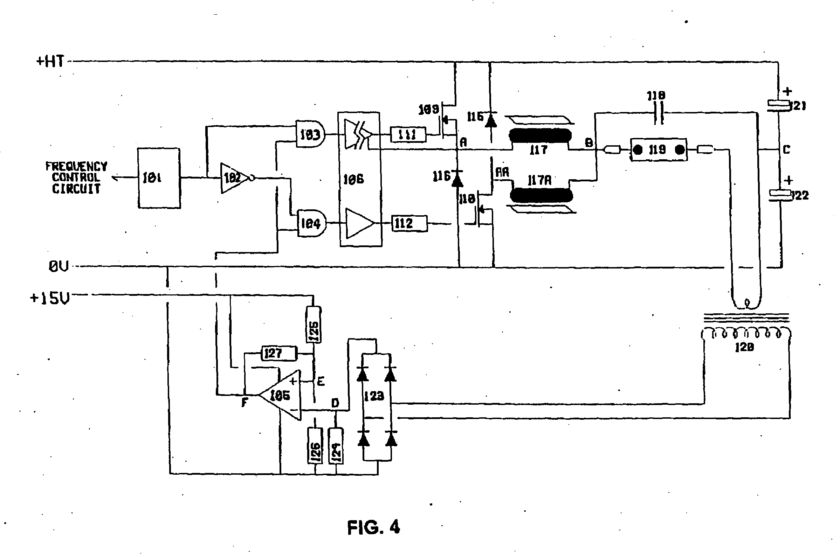

A frequency control circuit (not shown in Fig. 4) controls oscillator 101 to output a square wave. The output of the oscillator 101 is split, one half being passed through an inverter 102, to create two complementary outputs in anti-phase with each other. These anti-phase outputs are connected to the inputs of two dual input AND gates 103 and 104, the other inputs of the two AND gates being connected to the output of a voltage comparator 105. The outputs of the two AND gates 103,104 are connected to a MOS gate driver IC 106, which drives a pair of MOSFETs 109,110 via gate drive resistors 111,112. Each MOSFET 109,110 is serially connected to a fast recovery diode 115,116. The respective MOSFET to diode connection nodes A and AA are further connected to separate inductors 117 and 117A, which are connected to each other at node B, which is also connected to capacitor 118 and lamp 119. The capacitor 118 is connected to node C. The lamp 119 is returned to node C via the primary winding of current transformer 120. Node C provides a current return path for capacitor 118 and lamp 119 via capacitors 121,122 to the +HT and 0V rails.

In the first mode of operation, the frequency control circuit sets the oscillator frequency to typically several tens of kilohertz. The output of voltage comparator 105 (node F) is a logic 1 so the anti-phase complementary outputs from oscillator 101 and inverter 102 are "passed" by AND gates 103 and 104, driving the inputs of the MOS gate driver IC 106, which in turn drives the gates of the MOSFETs 109 and 110. The alternate switching of the MOSFETs 109 and 110 alternately connects node A to the +HT rail and node AA to the 0V rail so that the LC resonant circuit comprising inductors 117 and 117A and capacitor 118 is stimulated alternately via node A and inductor 117 and via node AA and inductor 117A at the fundamental resonant frequency of the resonant LC components or a harmonic thereof. Thus voltage multiplication occurs at node B owing to the Q-factor of the resonant components 117 and 118. The resonant components are designed with sufficient Q-factor to provide a voltage capable of ionising the gas filling the arc tube of lamp 119, thus initiating an arc at the lamp electrodes.

This arc is sustained by current flowing via the primary winding of current transformer 120 and node C to the capacitors 121 and 122, which allow the current to return to the +HT and 0V rails. The arc impedance is sufficiently low to divert most of the current flowing in inductor 117 or 117A away from capacitor 118 and via the lamp 119. The circuit operates in this first mode until the lamp electrodes are sufficiently heated to establish thermionic emission. The circuit is then switched to the second of the two discrete modes of operation.

In the second mode of operation, the frequency control circuit sets the oscillator 101 to a second, lower frequency, typically though not exclusively several tens or hundreds of hertz. Since thermionic emission is already established in the lamp by the heating of the electrodes in the first mode of operation, the voltage available at the lamp terminals in this second (non-resonant) mode of operation is sufficient to maintain the arc at the lamp electrodes. The output of voltage comparator 105 (node F) is a logic 1 so the anti-phase complementary outputs from oscillator 101 and inverter 102 are "passed" by AND gates 103 and 104, driving the inputs of the MOS gate driver IC 106, which in turn drives the gates of the MOSFETs 109,110. The alternate switching of the two MOSFETs 109,110 on and off in opposition alternately connects node A to the +HT rail and node AA to the 0V rail. Thus in one half cycle of the oscillator MOSFET 109 conducts current from the +HT rail to the lamp via node A, inductor 117 and node B; and in the opposing half cycle of the oscillator MOSFET 110 conducts current from the lamp to the 0V rail via node B, inductor 117A and node AA.

Lamp current is transformed by the turns ratio of the current sensing transformer 120, rectified by rectifier 123 and converted to a positive voltage across resistor 124 proportional to lamp current. This voltage appears at node D and is referenced to the 0V rail. Node D is connected to the inverting input of voltage comparator 105. The voltage at node D is compared with a voltage set by a potential divider (resistors 125 and 126), the mid point of which (node E) is connected to the non-inverting input of voltage comparator 105. Should the lamp current proportional voltage at node D exceed the voltage set by the potential divider at node E the output (node F) of the voltage comparator 105 is switched to a logic 0 state. Since node F is connected to the inputs of the AND gates 103 and 104, both outputs from the AND gates are then forced to a logic 0 level irrespective of the logic states of the other inputs to the AND gates set by the outputs of the oscillator 101 and the inverter 102. Thus whichever MOSFET 109 or 110 was conducting and sourcing current into the lamp circuit is switched to a non-conducting state and reactive current flowing in the inductor 117 or 117A is circulated via the fast recovery diode 116 or 115. When the current value decays sufficiently to reduce the lamp current proportional voltage at node D to a voltage below that set at node E, the voltage comparator output node F returns to a logic 1 state allowing the AND gates 103 and 104 to "pass" the relevant logic states set on their other inputs and thus to switch the relevant MOSFET 109,110 to a conducting state.

Typically, the lamp current in the first mode of operation is insufficiently high to trigger operation of this current limit circuit. Since the oscillator frequency in the second mode of operation is substantially lower than in the first mode of operation, the inductors 117, 117A will pass much higher currents as their impedance at low frequency is much lower than their impedance at high frequency. Therefore the operation of the current limiting circuit described above is an essential feature in this second mode of operation. Indeed, due to the operation of the current limiting circuit, the lamp current waveform in the second mode approximates a square wave with some high frequency ripple due to the operation of the current limiting circuit superimposed on the top and bottom extremities of the waveform.

The prior art circuit illustrated in Fig. 4 was limited in practical application due to the relatively high amplitude ripple current at the lamp caused by the switching of the buck converters in the second, continuous mode of operation. Proposed international standards require low levels of high frequency ripple on the lamp waveform so as to reduce the possibility of acoustic arc resonance occurring.

Environmental concerns have also reduced the use of radioactive krypton in some discharge lamps, with the result that they are more difficult to strike and with the known circuit a higher striking voltage would be required.

### Summary of the invention

The invention provides a lamp ballast circuit as defined in claim 1. Preferred but non-essential features of the circuit are defined in claims 2 to 6.

The invention also provides a method of powering a high intensity discharge lamp as defined in claim 7. Preferred but non-essential features of this method are defined in claims 8 to 12.

### The drawings

Fig. 1 illustrates a high intensity discharge lamp ballast according to a preferred embodiment of the present invention.
Fig. 2 illustrates a circuit diagram of one example of a lamp ballast according to Fig. 1.
Fig. 3 is a flowchart of one method of operating a high intensity discharge lamp ballast according to the invention.
Fig. 4 illustrates a high intensity discharge lamp ballast according to the prior art.

### Brief description of preferred embodiments

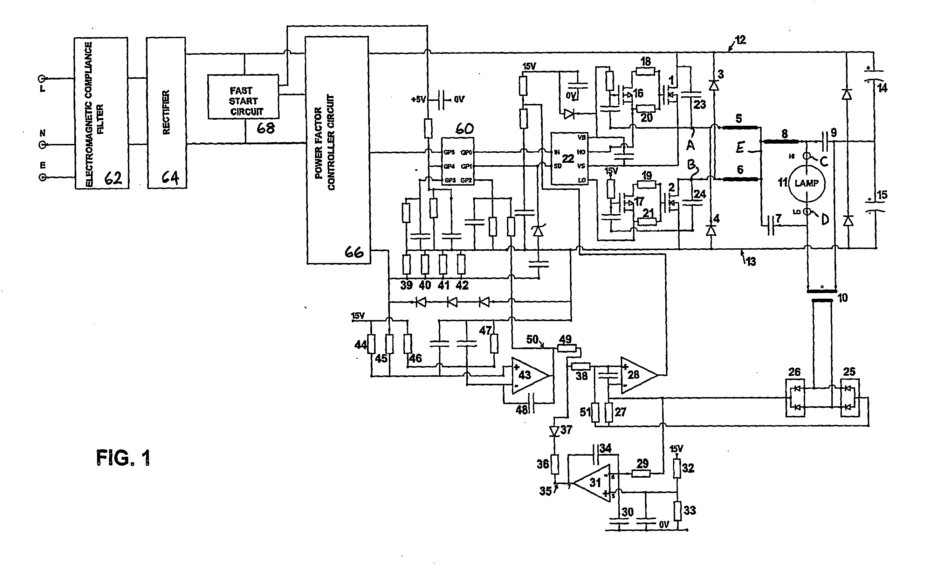

The circuit illustrated in Fig. 1 has the same general topology of a dual buck converter output stage comprising semiconductor switching devices 1 and 2, diodes 3 and 4, and inductors 5 and 6 connected between high voltage DC bus positive and negative rails 12 and 13 as described in relation to the prior art of Fig. 4. The different components may be implemented by any now known or later developed device, such as the main switches 1, 2 being MOSFETS or IGBT devices.

The circuit of Fig. 1 differs from the illustration of Fig. 4. First, Fig. 1 includes an electromagnetic compliance filter 62, a rectifier 64, and a power factor controller 66. Any now known or later developed circuits for these components may be used.

Second, Fig. 1 also includes a controller 60. The controller 60 is a microprocessor, general processor, integrated circuit, application specific integrated circuit, field programmable gate array, analog circuit, digital circuit, combinations thereof or other now known or later developed control device. The controller 60 controls operation of the power factor controller 66, temperature control, reference voltages, and/or a gate driver circuit 22. The controller 60 includes an oscillator or controls an oscillator in the gate driver integrated circuit (IC) 22 for operating the main switches 1 and 2.

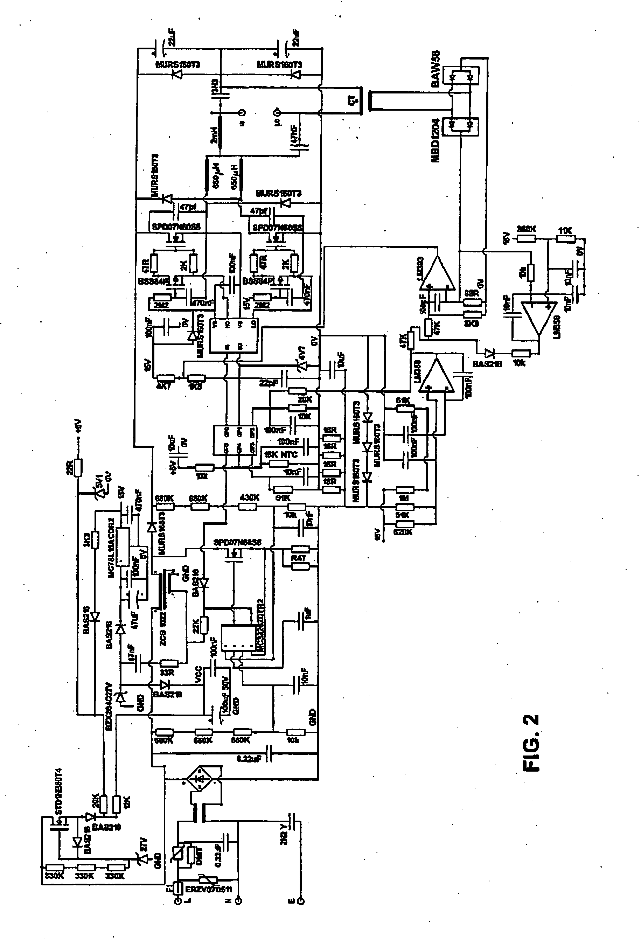

Third, Fig. 1 includes a fast start circuit 68. As shown in Figure 2, the fast start circuit 68 includes a transistor, a plurality of diodes and resistors. Additional, different or fewer components may be provided. The fast start circuit 68 is a voltage source supply independent of mains voltage which allows the power factor controller 66 and the controller 60 to be powered up when required at mains power up or under control of the stored program in the controller 60. During a shutdown period caused by the stored program in the controller 60, the supply of current to the controller 60 is maintained by the fast start circuit 68 so as to allow the controller 60 to maintain position in the stored program and thus schedule events that are time based. The fast start circuit 68 also allows the voltage to be maintained on the power factor controller circuit supply such that when the stored program in the controller 60 demands that the power factor controller 66 be operable, the power factor controller 66 is immediately ready for such operation.

Fourth, the gate driver IC 22 connects with the switches 1 and 2 through gate driver circuits. Each gate driver circuit includes a switch 16, 17, low value resistors 18, 19 and high value resistors 20, 21. The gate driver IC 22 is an integrated circuit, but may be a processor, field programmable gate array, analog circuit, digital circuit or other device for controlling the main switches 1, 2. The switches 16, 17 are semiconductor switches, such as transistors or MOSFET, but may be other digital or analog switches now known or later developed. The switches 16 and 17 may be referred to as performance switches since the performance of the gate driving circuit varies based on the operation of the switches 16, 17. The low and high value terminology for the resistors 18, 19, 20, 21 is relative resistances and may have any difference.

Fifth, the resonant circuit includes an additional inductor 8 connected in series between the inductors 5, 6 and the lamp terminal (C). The inductor 8 and capacitor 9 operate as a resonance circuit for striking the lamp 11. A bypass capacitor 7 connects the inductors 5, 6 to the other lamp terminal (D). The bypass capacitor is a relatively high value capacitor. One lamp terminal C is connected to the node of the inductor 8 and capacitor 9, and the other lamp terminal D is connected to the node of capacitor 7 and the current transformer 10. The current transformer 10 is connected to the node of two capacitors 14 and 15, which are respectively connected to the positive and negative DC bus rails 12 and 13, thereby enabling current from lamp 11 and capacitor 7 to be returned to the DC bus rails. Additional or different components may be used for bypassing and resonating, such as further inductor, capacitor and/or resistor components.

Lastly, additional feedback control is provided. The feedback control includes the comparator 28, the amplifiers 31 and 43, resistors, capacitors and diodes. Other feedback with different, additional or fewer components may be provided. The comparator 28 and amplifiers 31, 43 are operational amplifiers, such as in an integrated circuit, but may be other digital or analog devices. The comparator 28 is a current limiting circuit operable to control operation of the dual buck converters. Other current limiting circuits may be used, such as the operational amplifier 31 (integrator) and/or operational amplifier 43. Other arrangements of components may be provided.

Fig. 2 is a circuit diagram of one embodiment of Figure 1. Figure 2 shows the values or parts for the various circuit components for operation as a 39 Watt universal input HID lamp ballast. Other values or parts may be used for the same or different ballasting operation.

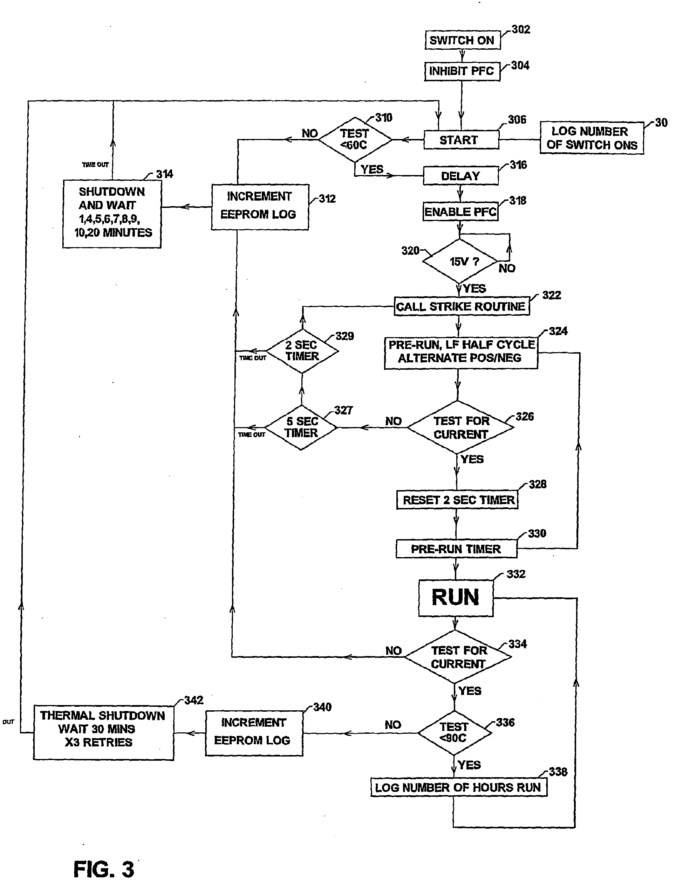

Fig. 3 shows one embodiment of a method for operating the high intensity discharge lamp ballast of Figs. 1 or 2, but may be used for other ballasts. Additional, different or fewer acts than shown in Fig. 3 may be used. The acts are performed in the order shown or a different order. The method of Fig. 3 and the ballast of Fig. 1 are described in combination below.

In act 302, the mains supply to the ballast is switched on and the fast start circuit provides current to the controller 60 which enables the start of the software stored program. Initially, the controller 60 inhibits operation of the power factor controller 66 in act 304. Operation starts in act 306. The start or switch on is logged in act 308. In act 310, the controller 60 tests the temperature, such as measuring a voltage across a thermistor. If the temperature is below a threshold, such as 60 degree Celsius, the method is delayed in act 316. The delay is so that repeated switching on and off of the mains will not give rise to excessive dissipation during the high loss first mode of operation. The thermal limit for start is so the high loss first mode of operation does not risk damage to the circuit due to thermal stress. Also the likelihood of the lamp being cool enough to strike if the ballast is still above 60 degrees Celsius from previous operation is almost zero. In act 318, the power factor controller 66 is released for operation. In act 320, the controller 60 tests for proper voltage output to the ballast circuit. Other start-up tests, routines or procedures may be used.

If the proper circuit voltage and temperature exist during the start-up acts, the process proceeds to one of two different modes of operation. The first mode includes acts 322-330 for striking and sufficiently ionizing the gas in the lamp 11. The second mode includes acts 332-338 for running the ballast and lamp at steady state. Each of the modes may include additional, different or fewer acts.

The first mode attempts to strike the lamp 11 with a high frequency and high voltage signal. One buck converter includes the main switch 1, diode 4 and inductor 5, and another buck converter includes the main switch 2, diode 3 and inductor 6. The main switches 1, 2 are semiconductor switching devices, such as MOSFETs. The main switches 1, 2 are switched alternately ON and OFF. The current from each buck converter charges the capacitor 7 and is returned via current transformer 10 to the DC bus rails 12 and 13 via capacitors 14 and 15. The current flowing alternately in opposite directions from each buck converter in the capacitor 7 causes the capacitor to charge first in one direction and then in the other such that there is a voltage change on the capacitor 7 in response to the alternate half cycles of current from each of the buck converters. This voltage change is amplified by the LC filter and resonance circuit (inductor 8 and capacitor 9), resulting in a high voltage required for ionising the gas in the lamp arc tube 11 and initiating the arc.

The main switches 1, 2 operate at various programmed frequencies and programmed duty cycles. In act 322, the controller 60 loads a strike routine to control the frequencies and duty cycles. The strike routine may be provided by digitally stored code or program or analog control means. The frequency of the switching of the two buck converters may be controlled within a range such that a range of tolerance in the inductor 8 and capacitor 9 is accounted for in generating resonance. Depending on where a particular combination of the inductor 8 and capacitor 9 is within the tolerance, a particular frequency causes resonance amplification by the resonance circuit. The resonance amplification causes a high voltage required for ionising the gas in the lamp 11 and initiating the arc.

In addition to tolerance of the resonance circuit, externally connected additional capacitance may shift the resonant frequency. Such external additional capacitance may be the result of long lengths of cable between the ballast and the connected lamp 11 or other externally connected capacitive elements. The variance of the frequency of the switching of the two buck converters pursuant to the strike routine accounts for likely amounts of this additional capacitance and corresponding shift in resonant frequency. By variation of the frequency, at least one alternating signal may contain the fundamental resonant frequency or be close enough in frequency to cause resonance. The frequency is varied over a range of frequencies covering all of or portions of any designed tolerance of LC components 7, 8, 9 used in the LC filter and resonance circuit and, optionally, any externally connected capacitance.

In act 324, the variation of the frequency includes subharmonic frequencies of one or more of the attempted fundamental resonant frequencies or other possible resonant frequencies within the tolerance of the LC filter and resonance circuit with or without any possible externally connected capacitance. Such subharmonic frequencies, especially odd subharmonics (e.g., the third or fifth subharmonics), may generate resonance in the circuit but at lower amplitude than by driving the resonant circuit at the fundamental frequency. If the lamp 11 is first "primed" by applying a low amplitude voltage for an extended time, then an arc may be initiated in the lamp 11 more easily, i.e. by applying a voltage of lower amplitude or shorter duration than if the lamp 11 had not been so primed. If the LC filter and resonance circuit is driven at a subharmonic frequency for a period of time in order to create resonance at a low amplitude, the lamp 11 is thereby primed. Subsequent striking of the lamp 11 may be achieved by driving the LC circuit for a comparatively short time at the fundamental frequency.

In one example, the LC filter and resonance circuit has a typical fundamental frequency of 69 kHz. The circuit is first driven at the third subharmonic frequency of 23 kHz for a period of 4 ms, followed by six cycles of the fundamental frequency (lasting 87 µs), which may be sufficient to cause the lamp to strike. If the lamp does not strike, the pattern can be repeated as part of the strike routine. With each repetition, the two driving frequencies may be incremented slightly (while remaining in proportion to one another) to try to achieve better resonance, until the lamp 11 is successfully struck.

The duty cycle of the said two buck converters is controlled to ensure the inductors 5 and 6 do not saturate and thereby allow damaging high currents to flow in the main switches 1 and 2 and diodes 3 and 4. Current flows in the same direction through the serially connected inductors 5 and 6 between the high and low voltage rails 12, 13, allowing a build-up of current. A 50% duty cycle for alternating operation of the main switches 1 and 2 may saturate the inductors 5, 6 after two or more cycles. To allow sufficient current decay to avoid saturation at high frequency operation, a duty cycle less than 50% is used for each of the main switches 1, 2. Any duty cycle may be used, such as less than 30%, 25% or 20%. The duty cycle of the signals at the fundamental frequencies may be different or the same as the duty cycles of the signals at the subharmonics. Duty cycles of 50% may be used in alternative embodiments.

Different duty cycles may be provided for different frequencies or at different times. Variation of the frequency and duty cycle may cover a range of frequencies and a range of duty cycles. The frequency and duty cycle may be varied together or independently to control currents in the main switches 1, 2 and control the high voltage required for ionising the gas in the lamp 11 and initiating the arc. Such control of frequency may comprise several steps each of discrete frequency or a sweep of frequencies.

In one embodiment, the strike routine of act 322 is provided in Table 1 below:

| **Table 1: STRIKE ROUTINE** | | | |
|---|---|---|---|
| **Time** | **Frequency description** | **Frequency** | **Duty Cycle** |
| 4 mS | 1/3 harmonic 1 | 20 kHz | 20% |
| 6 cycles | fundamental 1 | 62 kHz | 50% |
| 4 mS | 1/3 harmonic 2 | 21 kHz | 21% |
| 6 cycles | fundamental 1 | 62 kHz | 50% |
| 4 mS | 1/3 harmonic 3 | 22 kHz | 22% |
| 6 cycles | fundamental 2 | 72 kHz | 50% |
| 4 mS | 1/3 harmonic 4 | 23 kHz | 23% |
| 6 cycles | fundamental 2. | 72 kHz | 50% |

The time provides a duration for applying the alternating signal. The fundamental frequency varies in two steps (fundamental 1 and 2), and the third subharmonic varies in four steps (1/3 harmonic 1 to 4). Harmonics 1 and 2 are subharmonics of slightly smaller and larger fundamental frequencies from fundamental 1, and harmonics 3 and 4 are different smaller subharmonics of the fundamental 2. Other frequencies, frequency shifts, step sizes, number of frequencies, shift patterns or other characteristics may be used. Different duty cycles may also be used.

In act 326, the controller 60 tests for current indicating that the lamp has been struck.
In act 328, if current is detected, the 2 sec timer is reset to zero. If the current is intermittent, the software loop carries on to the 5 sec limit in act 327. If no current is detected during any 2 second period of act 329, the ballast times out and goes to shutdown in act 314 after incrementing a log in act 312. If current is intermittent in act 329, the 2 second timer is reset each time there is current detected until either the 2 second timer in act 329 or the 5 second timer act 327 times out and the ballast shuts down in act 314. The strike routine process continues until sufficient current is detected in act 326 or one of the timers of acts 327 and 329 routes the process to a shutdown or failure mode of act 314. In the shutdown mode, different wait periods which increase incrementally are sequentially implemented for subsequent shutdowns before returning to act 306. A same wait period, a different number of wait periods or other wait periods than shown in Fig. 3 may be used. If neither of the timers has expired, the process of acts 322, 324 and 326 continues. Different subharmonics and fundamental frequencies are attempted pursuant to the strike routine.

In act 328, a timer is set. In act 330, the timer is pre-run. If current is detected in act 326, then the 2 second timer in acts 328 and 329 is reset and the pre-run timer is incremented in act 330. The ballast continues in pre-run mode where it is possible to go back and call the strike routine if no current is detected at act 326. If there is current detected each time at act 326, the pre-run timer 330 times out eventually and the ballast goes to run at act 332. In the pre-run operation, the ballast may swap between the first mode (strike routine) and second mode (test for current at low frequency alternate half cycles) dependent on the detection of current or not.

In act 332, the ballast begins to run in the second mode of operation. In the second mode of operation, the two buck converters are again each operated to control current in opposing half cycles of low frequency lamp current to give a near square wave current output in the lamp 11. The high frequency ripple current from the switching of the two buck converters is bypassed to the current measuring node at the transformer 10 by the capacitor 7. The voltage on the capacitor 7 changes only slightly with the incoming current from the buck converters. The resonant circuit of the inductor 8 and capacitor 9 filters additional high frequency ripple, further attenuating any high frequency current in the connected lamp 11. The lamp current is substantially square wave with a very low amplitude of high frequency ripple current superimposed.

For operation in the second mode, the main switches 1, 2 operate as substantially zero current switches to limit current loss. The switches 16, 17 and resistors 18-21 form gate drive circuits. The switches 16, 17 operate in different states for the different modes of operation of the ballast.

In the first, high frequency mode of operation, the switching ON of the semiconductor switching devices 1, 2 is required to be fast so as to provide good control of duty cycle. Such fast switching is provided by low value gate drive resistors 18 and 19 each connected in series with respective switches 16 and 17. When one of the switches 16, 17 is ON, the gate of the corresponding buck converter main switch 1, 2 is switched by the gate driver IC 22 via the low value resistor 18, 19 in parallel with the higher value resistor 20, 21.

In the second mode of operation, the switching ON of the main switches 1, 2 is required to be slower so as to charge the turn OFF current commutating capacitors 23, 24 slowly to minimise losses. Such losses are less sustainable in the second mode of operation, which is intended to run continuously, than in the first mode of operation, which is intended to run only temporarily on start-up. In one embodiment, a frequency of 155 Hz is used. The faster switching is provided by higher value gate drive resistors 20, 21 connected in parallel with the serially connected low value resistors 18, 19 and the switches 16, 17. When one of the semiconductor switching devices 16, 17 is OFF, the gate of the corresponding buck converter main switch 1, 2 is switched ON by the driver IC 22 via the higher value gate drive resistor 20, 21.

Control of the switches 16, 17 that connect or disconnect the low value gate drive resistors 18, 19 for switching ON of the buck converter main switch 1, 2 may be via a passive RC charge circuit or by active means provided by digitally stored code or program or other digital or analog control means. The switch on of the main switches 1, 2 occurs at substantially zero inductor current, so the main switch 1, 2 is provided substantially only the current to discharge the commutating capacitors 23, 24. The switch voltage gradually transitions.

In both modes of operation, the switching OFF of the main switch 1, 2 by the gate driver IC 22 is via the high value resistor 20, 21 in parallel with the serially connected low value resistor 18, 19 and the parasitic diode in the switching semiconductor device 16, 17. The semiconductor switching device turns OFF very fast and the current is commutated away from the switching device 1, 2 into the respective capacitor 23, 24 in order to avoid losses in the switching device 1, 2. The switched resistors 18 to 21 and the commutating capacitors 23, 24 allow operation of the main switches 1, 2 as substantially zero current switching devices. Any time period for transition of the turn-off voltage may be used, such as 250 nanoseconds.

In the second mode of operation, the buck converter inductor current is controlled such that the active buck converter for the present half cycle of low frequency lamp current is switched OFF at nominally two times the nominal lamp current and switches ON immediately or after a delay when the buck converter inductor current is at zero. Since the rise and fall of current in the buck converter inductor 5, 6 is substantially linear with time, the average inductor current may be substantially the same as the nominal lamp current, even though the main switches 1 and 2 switch off at about two times the nominal lamp current. Switching losses may be avoided by the commutating capacitors 23, 24 and allow a smaller main switch 1, 2, such as a surface mounted transistor. The high frequency ripple current from the switching of the active buck converter is bypassed by the capacitor 7 and attenuated by the LC filter formed by the inductor 8 and capacitor 9. Despite the large changes in current in the buck converter inductor 5, 6, the current in the lamp 11 remains substantially a square wave with a relatively small amount of superimposed high frequency ripple.

After striking the lamp 11 in the first mode of operation and switching to the second mode of operation, the lamp warm up current which is typically between 1.2 and 1.8 times the nominal lamp running current is controlled by an average current control circuit. The average current control circuit includes the resistor 29, capacitor 30, rectifier circuits 25, 26 and current transformer load resistor 27. The resistor 29 and capacitor 30 act to average the voltage proportional to the current signal from the current transformer 10. The average current signal, which is the average of the sum of the lamp 11 and capacitor 7 currents, is compared to a reference voltage value set by potential divider resistors 32 and 33. The comparison is made by the operational amplifier 31, which is configured as an integrator- If the voltage representing the average current signal is below that of the reference value signal, the output of the operational amplifier 31 changes at a rate controlled by the capacitor 34 in a positive direction, and if the voltage representing the average current signal is above that of the of the reference value signal, the output of the operational amplifier 31 changes at a rate controlled by capacitor 34 in a negative direction. This output signal 35 is used by the comparator 28 to control the average lamp current during lamp warm up when the lamp arc voltage is low compared to the nominal fully warmed up lamp voltage. The comparator 28 compares the instantaneous lamp 11 and capacitor 7 current with the value of the output signal 35 provided via resistor 36, diode 37 and resistor 38 from the average current control circuit. The lamp warm up current is controlled to give ideal lamp warm up current and maintain safe current in the buck converter switching semiconductors 1, 2.

The ballast circuit is provided with a fixed DC bus voltage on positive and negative rails 12 and 13 such that current flowing in the DC bus is substantially proportional to power in the lamp. The DC bus current is sensed by the controller 60 using the resistors 39-42. The voltage drop across the resistors 39-42 is substantially proportional to power in the lamp.

As the lamp warms up and the arc voltage increases near to nominal lamp voltage, the lamp power control circuit controls the current in the lamp 11. The lamp power control circuit includes the operational amplifier 43, resistors 44, 45, 46 and 47, capacitor 48 and output resistor 49. By comparing the voltage drop at the power sensing resistors 39-42 to a reference voltage signal provided by the resistor potential divider network of resistors 44-47, the output 50 of the operational amplifier 43 changes positive or negative depending on the difference between the power proportional voltage drop sensed in the power sensing resistors 39-42 and the reference voltage signal. This power difference output signal is used to control the sum of the average first stage capacitor current and the lamp current via a potential divider. The potential divider includes the resistors 49, 38, and 51. The comparator 28 compares the instantaneous lamp 11 and capacitor 7 current with the value of the power difference output signal 50. When the lamp 11 approaches operating temperature and nominal operating voltage, the lamp power is accurately controlled at nominal lamp power by altering the control reference signal on the comparator 28, thus altering the value of current at which the comparator 28 output logic signal changes state, thus switching the logic level on the shutdown pin of the gate driver IC 22, and thus switching OFF or ON the active buck converter circuit in response to the comparison of instantaneous current signal and desired current signal from the power control circuit.

Independent control by the comparator 28, amplifier 31 and amplifier 43 may be used, such as independently controlling high frequency and average lamp current. In one embodiment, zero current is measured to switch on the main switches 1, 2. In other embodiments, the zero current is assumed due to timing with or without additional delay at the zero current. One option is to use a secondary winding on the buck converter inductor. When the stored energy in the inductor core is fully dissipated (e.g., zero flux = zero current), the voltage across the secondary collapses to zero. This may be sensed and the used to turn on the main switches again.

Switching between the first and second modes of operation is dependent upon successful striking of the lamp 11 and establishment of a stable arc in the lamp 11. The first mode of operation may be followed by a change to the second mode of operation during which the lamp current is monitored in act 334. If there is no lamp current sensed after switching to the second mode of operation, there will be no switching OFF of the active buck converter for the present half cycle of low frequency. This may be sensed from the signal from the current transformer 10 via current signal rectifier circuit 25, 26, current transformer load resistor 27 and comparator 28. The output of the comparator 28 controls the logic level on the shutdown pin of the gate driver IC 22. This is also connected to one of the input pins on the controller 60 which may be programmed to respond if no change in the logic level is sensed in response to lamp current. Other arrangements for monitoring lamp current and/or responding are possible.

If no lamp current is sensed, the process may switch back to the first mode of operation where high voltage will again attempt to strike the lamp 11, such as through acts 312 and 314 or through a different route. This switching from first to second and back to first mode of operation may be attempted for any number of times or amount time as determined by a stored program or other digital or analog device. Such switching back and forth between first and second modes may be terminated by an overriding timer such that the circuit shuts down for a predetermined time before again attempting to strike the lamp and establish a stable arc (act 314) or may after several such cycles of the timer shutdown permanently until power is removed and subsequently restored to the circuit. Such control strategy may be stored as a program or accomplished by other digital or analog devices.

In act 336, the temperature is checked during operation of the lamp 11 in the second mode. The thermistor or other temperature sensor determines whether the circuit or a portion of the ballast is over a threshold temperature, such as 90 degrees Celsius, the same temperature as act 310 or a different temperature. If the temperature exceeds the threshold, a log in a memory is incremented or saved in act 340. A thermal shutdown is then implemented in act 342. The shutdown is for sufficient time, such as 30 minutes, to cool the ballast and/or lamp 11. The ballast may then be restarted in act 306.

In act 338, the time the lamp 11 and/or ballast circuit has been operating is logged. The process continues to run the lamp 11 in act 332 until the ballast is switched off, insufficient current is sensed in act 334 or the temperature becomes excessive in act 336.

## Claims

1. A lamp ballast circuit comprising:
a source of high voltage having a positive rail and a negative rail;
a first lamp terminal (C) and a second lamp terminal (D), between which a high intensity discharge lamp (11) can be connected;
a first switch (1) connected between the positive rail and a first node (A), a first diode (4) connected between the first node (A) and the negative rail, and a first inductor (5) connected between the first node (A) and a common node (E);
a second diode (3) connected between the positive rail and a second node (B), a second switch (2) connected between the second node (B) and the negative rail, and a second inductor (6) connected between the second node (B) and the common node (E);
a first capacitor (9) connected in parallel with the lamp terminals (C,D);
a driver (22) for operating the first and second switches (1,2); and
a current limiting circuit for limiting the electrical current through a lamp (11) connected between the lamp terminals (C,D);
**CHARACTERIZED BY** further comprising:
a third inductor (8) connected between the common node (E) and the first lamp terminal (C), such that the third inductor (8) and the first capacitor (9) form a high frequency resonance circuit for striking the lamp (11); and
a second capacitor (7) connected between the common node (E) and the second lamp terminal (D) for diverting ripple current away from the lamp (11).

2. A lamp ballast circuit according to claim 1, wherein each of the first and second switches (1,2) has a commutating capacitor (23,24) connected in parallel with it.

3. A lamp ballast circuit according to claim 1 or claim 2, wherein the current limiting circuit comprises:
a first current sensor (10) connected so as to measure the instantaneous current through a lamp (11) connected between the lamp terminals (C,D);
a converter (25,26,27) for converting the measured current to a voltage signal; and
a first comparator (28) having a first input connected to the voltage signal, a second input connected to a first reference voltage, and an output connected to the driver (22), for outputting to the driver (22) a signal determined by the difference between the voltage signal and the first reference voltage.

4. A lamp ballast circuit according to claim 3, wherein the current limiting circuit further comprises:
an amplifier (31) configured as an integrator and having a first input connected to the voltage signal, a second input connected to a second reference voltage, and an output connected to the second input of the first comparator (28), for outputting to the first comparator (28) a signal (35) determined by an average over time of the difference between the voltage signal and the second reference voltage.

5. A lamp ballast circuit according to claim 3 or claim 4, wherein the current limiting circuit further comprises:
a second current sensor (39,40,41,42) connected so as to measure the current through the rails (12,13) of the high voltage source and convert the measured current to a voltage signal; and
a second amplifier (43) having a first input connected to the voltage signal, a second input connected to a third reference voltage, and an output connected to the second input of the first comparator (28), for outputting to the first comparator (28) a signal (50) determined by the difference between the voltage signal and the third reference voltage.

6. A lamp ballast circuit according to any preceding claim, wherein the driver (22) is connected to a gate of each of the switches (1,2) via a gate drive circuit, each gate drive circuit comprising:
a gate drive switch (16,17) in series with a first gate drive resistor (18,19) between an output from the driver (22) and the gate of the switch (1,2); and
a second gate drive resistor (20,21) connected between the output from the driver (22) and the gate of the switch (1,2) in parallel with the gate drive switch (16,17) and the first gate drive resistor (18,19);
wherein the first gate drive resistor (18,19) has a lower resistance than the second gate drive resistor (20,21).

7. A method of powering a high intensity discharge lamp (11) that is connected between the lamp terminals (C,D) of a lamp ballast circuit according to any of claims 1 to 6, the method comprising the steps of:
in a first mode, operating the first and second switches (1,2) alternately at a first switching frequency so as to cause resonance in the third inductor (8) and the first capacitor (9), thereby generating sufficient voltage between the first and second lamp terminals (C,D) to cause the lamp (11) to strike; and
subsequently, in a second mode, while the lamp (19) continues to conduct, operating the first and second switches (1,2) alternately at a second switching frequency that is lower than the first frequency, and using the second capacitor (7) to divert high frequency ripple current away from the lamp (11).

8. A method according to claim 7 of powering a high intensity discharge lamp (11), the method further comprising:
in the first mode, varying the first switching frequency over a continuous or discrete range of possible resonant frequencies.

9. A method according to claim 7 or claim 8 of powering a high intensity discharge lamp (11), the method further comprising:
in the first mode, operating the first and second switches (1,2) alternately at an odd subharmonic of the first switching frequency before operating the switches (1,2) at the first switching frequency.

10. A method according to claim 9 of powering a high intensity discharge lamp (11), wherein the first and second switches (1,2) are operated alternately at the odd subharmonic in a less than 50% duty cycle.

11. A method according to any of claims 7 to 10 of powering a high intensity discharge lamp (11), the method further comprising:
in the second mode, wherein only one of the switches (1,2) and its associated inductor (5,6) are active during each half cycle of the second switching frequency, using the current limiting circuit to turn off the active switch when the current in the associated inductor (5,6) reaches substantially twice a nominal working current of the lamp; and turning on the active switch when the current in the lamp is substantially zero.

12. A method according to any of claims 7 to 11 of powering a high intensity discharge lamp (11) that is connected between the lamp terminals (C,D) of a lamp ballast circuit according to claim 6, the method comprising the steps of:
in the first mode, turning on the gate drive switches (16,17) so that the driver (22) turns on the main switches (1,2) via the first gate drive resistors (18,19) in parallel with the second gate drive resistors (20,21); and
in the second mode, turning off the gate drive switches (16,17) so that the driver (22) turns on the main switches (1,2) via the second gate drive resistors (20,21).

## Patentansprüche

1. Schaltung für ein Lampenvorschaltgerät, aufweisend:
eine Hochspannungsquelle mit einer positiven Anschlussleitung und einer negativen Anschlussleitung;
einen ersten Lampenanschluss (C) und einen zweiten Lampenanschluss (D), zwischen die eine Hochdruck-Gasentladungslampe (11) geschaltet werden kann;
einen ersten Schalter (1), der zwischen die positive Anschlussleitung und einen ersten Knoten (A) geschaltet ist, eine erste Diode (4), die zwischen den ersten Knoten (A) und die negative Anschlussleitung geschaltet ist, und einen ersten Induktor (5), der zwischen den ersten Knoten (A) und einen gemeinsamen Knoten (E) geschaltet ist;
eine zweite Diode (3), die zwischen die positive Anschlussleitung und einen zweiten Knoten (B) geschaltet ist, einen zweiten Schalter (2), der zwischen den zweiten Knoten (B) und die negative Anschlussleitung geschaltet ist, und einen zweiten Induktor (6), der zwischen den zweiten Knoten (A) und den gemeinsamen Knoten (E) geschaltet ist;
einen ersten Kondensator (9), der parallel zu den Lampenanschlüssen (C,D) geschaltet ist;
einen Treiber (22) zum Betreiben des ersten und des zweiten Schalters (1,2); und
eine Strombegrenzungsschaltung zum Begrenzen des elektrischen Stroms durch eine Lampe (11), die zwischen die Lampenanschlüsse (C,D) geschaltet ist;
**dadurch gekennzeichnet, dass** sie ferner aufweist:
einen dritten Induktor (8), der zwischen den gemeinsamen Knoten (E) und den ersten Lampenanschluss (C) geschaltet ist, so dass der dritte Induktor (8) und der erste Kondensator (9) einen Hochfrequenz-Schwingkreis zum Zünden der Lampe (11) bilden; und
einen zweiten Kondensator (7), der zwischen den gemeinsamen Knoten (E) und den zweiten Lampenanschluss (D) geschaltet ist, um einen Welligkeitsstrom von der Lampe (11) abzuleiten.

2. Schaltung für ein Lampenvorschaltgerät nach Anspruch 1, bei der sowohl der erste als auch der zweite Schalter (1,2) einen damit parallel geschalteten Kommutierungskondensator (23,24) aufweist.

3. Schaltung für ein Lampenvorschaltgerät nach Anspruch 1 oder 2, bei der die Strombegrenzungsschaltung aufweist:
einen ersten Stromsensor (10), der so geschaltet ist, dass er den momentanen Strom durch eine Lampe (11) misst, die zwischen die Lampenanschlüsse (C,D) geschaltet ist;
einen Wandler (25,26,27) zum Umwandeln des gemessenen Stroms in ein Spannungssignal; und
einen ersten Komparator (28) mit einem ersten Eingang, der mit dem Spannungssignal verbunden ist, einem zweiten Eingang, der mit einer ersten Referenzspannung verbunden ist, und einem Ausgang, der mit dem Treiber (22) verbunden ist, um ein Signal, das durch den Unterschied zwischen dem Spannungssignal und der ersten Referenzspannung bestimmt ist, an den Treiber (22) auszugeben.

4. Schaltung für ein Lampenvorschaltgerät nach Anspruch 3, bei der die Strombegrenzungsschaltung ferner aufweist:
einen Verstärker (31), der als ein Integrator ausgestaltet ist und einen ersten Eingang aufweist, der mit dem Spannungssignal verbunden ist, sowie einen zweiten Eingang, der mit einer zweiten Referenzspannung verbunden ist, und einen Ausgang, der mit dem zweiten Eingang des ersten Komparators (28) verbunden ist, um ein Signal (35), das durch einen Durchschnitt über die Zeit des Unterschieds zwischen dem Spannungssignal und der zweiten Referenzspannung bestimmt ist, an den ersten Komparator (28) auszugeben.

5. Schaltung für ein Lampenvorschaltgerät nach Anspruch 3 oder Anspruch 4, bei der die Strombegrenzungsschaltung ferner aufweist:
einen zweiten Stromsensor (39,40,41,42), der so geschaltet ist, dass er den Strom durch die Anschlussleitungen (12,13) der Hochspannungsquelle misst und den gemessenen Strom in ein Spannungssignal umwandelt; und
einen zweiten Verstärker (43), der einen ersten Eingang aufweist, der mit dem Spannungssignal verbunden ist, sowie einen zweiten Eingang, der mit einer dritten Referenzspannung verbunden ist, und einen Ausgang, der mit dem zweiten Eingang des ersten Komparators (28) verbunden ist, um ein Signal (50), das durch den Unterschied zwischen dem Spannungssignal und der dritten Referenzspannung bestimmt ist, an den ersten Komparator (28) auszugeben.

6. Schaltung für ein Lampenvorschaltgerät nach einem der vorhergehenden Ansprüche, bei welcher der Treiber (22) mit einem Gateanschluss jedes der Schalter (1,2) über eine Gate-Treiberschaltung verbunden ist, wobei jede Gate-Treiberschaltung aufweist:
einen Gate-Treiberschalter (16,17) in Reihe mit einem ersten Gate-Treiberwiderstand (18,19) zwischen einem Ausgang von dem Treiber (22) und dem Gateanschluss des Schalters (1,2); und
einen zweiten Gate-Treiberschalter (20,21), der zwischen den Ausgang von dem Treiber (22) und den Gateanschluss des Schalters (1,2) geschaltet ist, und zwar parallel zu dem Gate-Treiberschalter (16,17) und dem ersten Gate-Treiberwiderstand (18,19);
wobei der erste Gate-Treiberwiderstand (18,19) einen niedrigeren Widerstand aufweist als der zweite Gate-Treiberwiderstand (20,21).

7. Verfahren zum Versorgen einer Hochdruck-Gasentladungslampe (11), die zwischen die Lampenanschlüsse (C,D) einer Schaltung für ein Lampenvorschaltgerät nach einem der Ansprüche 1 bis 6 geschaltet ist, wobei das Verfahren die folgenden Schritte aufweist:
in einer ersten Betriebsart, ein abwechselndes Betreiben des ersten und des zweiten Schalters (1,2) bei einer ersten Schaltfrequenz, um eine Resonanz in dem dritten Induktor (8) und dem ersten Kondensator (9) zu verursachen, wodurch eine ausreichende Spannung zwischen dem ersten und dem zweiten Lampenanschluss (C,D) erzeugt wird, um die Lampe (11) dazu zu veranlassen, zu zünden; und
folgend, in einer zweiten Betriebsart, während die Lampe (19) weiterhin leitet, ein abwechselndes Betreiben des ersten und des zweiten Schalters (1,2) bei einer zweiten Schaltfrequenz, die niedriger ist als die erste Frequenz, und ein Verwenden des zweiten Kondensators (7) dazu, einen hohen Frequenzwelligkeitsstrom von der Lampe (11) abzuleiten.

8. Verfahren nach Anspruch 7 zum Versorgen einer Hochdruck-Gasentladungslampe (11), wobei das Verfahren ferner aufweist:
in der ersten Betriebsart, Variieren der ersten Schaltfrequenz über einen kontinuierlichen oder diskreten Bereich möglicher resonanter Frequenzen.

9. Verfahren nach Anspruch 7 oder Anspruch 8 zum Versorgen einer Hochdruck-Gasentladungslampe (11), wobei das Verfahren ferner aufweist:
in der ersten Betriebsart, abwechselndes Betreiben des ersten und des zweiten Schalters (1,2) bei einer ungeraden Subharmonischen der ersten Schaltfrequenz, bevor die Schalter (1,2) mit der ersten Schaltfrequenz betrieben werden.

10. Verfahren nach Anspruch 9 zum Versorgen einer Hochdruck-Gasentladungslampe (11), wobei der erste und der zweite Schalter (1,2) abwechselnd bei der ungeraden Subharmonischen mit einer Aussteuerung von weniger als 50% betrieben werden.

11. Verfahren nach einem der Ansprüche 7 bis 10 zum Versorgen einer Hochdruck-Gasentladungslampe (11), wobei das Verfahren ferner aufweist:
in der zweiten Betriebsart, bei dem nur einer der Schalter (1,2) und sein zugehöriger Induktor (5,6) während jedes Halbzyklus' der zweiten Schaltfrequenz aktiv sind, ein Verwenden der Strombegrenzungsschaltung, um den aktiven Schalter abzuschalten, wenn der Strom in dem zugehörigen Induktor (5,6) im Wesentlichen das Zweifache eines normalen Arbeitsstroms der Lampe erreicht; und Einschalten des aktiven Schalters, wenn der Strom in der Lampe im Wesentlichen null ist.

12. Verfahren nach einem der Ansprüche 7 bis 11 zum Versorgen einer Hochdruck-Gasentladungslampe (11), die zwischen die Lampenanschlüsse (C,D) einer Schaltung für ein Lampenvorschaltgerät nach Anspruch 6 geschaltet ist, wobei das Verfahren die folgenden Schritte aufweist:
in der ersten Betriebsart, Einschalten der Gate-Treiberschalter (16,17), so dass der Treiber (22) die Hauptschalter (1,2) über die ersten Gate-Treiberwiderstände (18,19) parallel zu den zweiten Gate-Treiberwiderständen (20,21) einschaltet; und
in der zweiten Betriebsart, Abschalten der Gate-Treiberschalter (16,17), so dass der Treiber (22) die Hauptschalter (1,2) über die zweiten Gate-Treiberwiderstände (20,21) einschaltet.

## Revendications

1. Circuit de ballast pour une lampe comportant :
une source de haute tension ayant un rail positif et un rail négatif,
une première borne de lampe (C) et une seconde borne de lampe (D), entre lesquelles une lampe à décharge à haute intensité (11) peut être connectée,
un premier commutateur (1) connecté entre le rail positif et un premier noeud (A), une première diode (4) connectée entre le premier noeud (A) et le rail négatif, et une première bobine d'induction (5) connectée entre le premier noeud (A) et un noeud commun (E),
une seconde diode (3) connectée entre le rail positif et un second noeud (B), un second commutateur (2) connecté entre le second noeud (B) et le rail négatif, et une deuxième bobine d'induction (6) connectée entre le second noeud (B) et le noeud commun (E),
un premier condensateur (9) monté en parallèle avec les bornes de lampe (C, D),
un circuit d'attaque (22) pour actionner les premier et second commutateurs (1, 2), et
un circuit limiteur de courant pour limiter le courant électrique circulant à travers une lampe (11) connectée entre les bornes de lampe (C, D),
**caractérisé en ce qu'**il comporte en outre :
une troisième bobine d'induction (8) connectée entre le noeud commun (E) et la première borne de lampe (C), de sorte que la troisième bobine d'induction (8) et le premier condensateur (9) forment un circuit résonnant à haute fréquence pour amorcer la lampe (11), et
un second condensateur (7) connecté entre le noeud commun (E) et la seconde borne de lampe (D) pour détourner un courant ondulatoire de la lampe (11).

2. Circuit de ballast pour une lampe selon la revendication 1, dans lequel chacun des premier et second commutateurs (1, 2) a un condensateur de commutation (23, 24) monté en parallèle avec lui.

3. Circuit de ballast pour une lampe selon la revendication 1 ou la revendication 2, dans lequel le circuit limiteur de courant comporte :
un premier détecteur de courant (10) connecté de manière à mesurer le courant instantané à travers une lampe (11) connectée entre les bornes de lampe (C, D), un convertisseur (25, 26, 27) pour convertir le courant mesuré en un signal de tension, et
un premier comparateur (28) ayant une première entrée connectée au signal de tension, une seconde entrée connectée à une première tension de référence, et une sortie connectée au circuit d'attaque (22), pour délivrer en sortie au circuit d'attaque (22) un signal déterminé par la différence entre le signal de tension et la première tension de référence.

4. Circuit de ballast pour une lampe selon la revendication 3, dans lequel le circuit limiteur de courant comporte en outre :
un amplificateur (31) configuré en tant qu'intégrateur et ayant une première entrée connectée au signal de tension, une seconde entrée connectée à une seconde tension de référence, et une sortie connectée à la seconde entrée du premier comparateur (28), pour délivrer en sortie au premier comparateur (28) un signal (35) déterminé par une moyenne dans le temps de la différence entre le signal de tension et la seconde tension de référence.

5. Circuit de ballast pour une lampe selon la revendication 3 ou la revendication 4, dans lequel le circuit limiteur de courant comporte en outre :
un second détecteur de courant (39, 40, 41, 42) connecté de manière à mesurer le courant circulant à travers les rails (12, 13) de la source haute tension et à convertir le courant mesuré en un signal de tension, et
un second amplificateur (43) et ayant une première entrée connectée au signal de tension, une seconde entrée connectée à une troisième tension de référence, et une sortie connectée à la seconde entrée du premier comparateur (28), pour délivrer en sortie au premier comparateur (28) un signal (50) déterminé par la différence entre le signal de tension et la troisième tension de référence.

6. Circuit de ballast pour une lampe selon l'une quelconque de revendications précédentes, dans lequel le circuit d'attaque (22) est connecté à une grille de chacun des commutateurs (1, 2) via un circuit d'attaque de grille, chaque circuit d'attaque de grille comportant :
un commutateur d'attaque de grille (16, 17) monté en série avec une première résistance d'attaque de grille (18, 19) entre une sortie du circuit d'attaque (22) et la grille du commutateur (1, 2), et
une seconde résistance d'attaque de grille (20, 21) connectée entre la sortie du circuit d'attaque (22) et la grille du commutateur (1, 2) monté en parallèle avec le commutateur d'attaque de grille (16, 17) et la première résistance d'attaque de grille (18, 19),
la première résistance d'attaque de grille (18, 19) ayant une résistance inférieure à celle de la seconde résistance d'attaque de grille (20, 21).

7. Procédé pour alimenter une lampe à décharge à haute intensité (11) qui est connectée entre les bornes de lampe (C, D) d'un circuit de ballast pour une lampe selon l'une quelconque des revendications 1 à 6, le procédé comportant les étapes consistant à :
dans un premier mode, actionner les premier et second commutateurs (1, 2) alternativement à une première fréquence de commutation afin de provoquer une résonance dans la troisième bobine à induction (8) et le premier condensateur (9), de manière à générer une tension suffisante entre les première et seconde bornes de lampe (C, D) afin d'amener la lampe (11) à s'amorcer, et
ensuite, dans un second mode, alors que la lampe (19) continue à être alimentée, actionner les premier et second commutateurs (1, 2) alternativement à une seconde fréquence de commutation qui est inférieure à la première fréquence, et utiliser le second condensateur (7) pour détourner un courant ondulatoire à haute fréquence de la lampe (11).

8. Procédé selon la revendication 7 consistant à alimenter une lampe à décharge à haute intensité (11), le procédé comportant en outre l'étape consistant à :
dans le premier mode, faire varier la première fréquence de commutation sur un une plage continue ou discrète de fréquences résonnantes possibles.

9. Procédé selon la revendication 7 ou la revendication 8 consistant à alimenter une lampe à décharge à haute intensité (11), le procédé comportant en outre l'étape consistant à :
dans le premier mode, actionner les premier et second commutateurs (1, 2) alternativement à une sous-harmonique impaire de la première fréquence de commutation avant d'actionner les commutateurs (1, 2) à la première fréquence de commutation.

10. Procédé selon la revendication 9 consistant à alimenter une lampe à décharge à haute intensité (11), dans lequel les premier et second commutateurs (1, 2) sont actionnés alternativement à la sous-harmonique impaire dans un cycle de service inférieur à 50%.

11. Procédé selon l'une quelconque de revendications 7 à 10 consistant à alimenter une lampe à décharge à haute intensité (11), le procédé comportant en outre l'étape consistant à :
dans le second mode, dans lequel uniquement l'un des commutateurs (1, 2) et sa bobine d'induction associée (5, 6) sont actifs pendant chaque demi cycle de la seconde fréquence de commutation, utiliser le circuit limiteur de courant pour mettre hors tension le commutateur actif lorsque le courant dans la bobine d'induction associée (5, 6) atteint sensiblement une valeur égale à deux fois un courant de travail nominal de la lampe, et mettre sous tension le commutateur actif lorsque le courant dans la lampe est sensiblement égal à zéro.

12. Procédé selon l'une quelconque des revendications 7 à 11 consistant à alimenter une lampe à décharge à haute intensité (11) qui est connectée entre les bornes de lampe (C, D) d'un circuit de ballast pour une lampe selon la revendication 6, le procédé comportant les étapes consistant à :
dans le premier mode, mettre sous tension les commutateurs d'attaque de grille (16, 17) de sorte que le circuit d'attaque (22) met sous tension les commutateurs principaux (1, 2) via les premières résistances d'attaque de grille (18, 19) en parallèle avec les secondes résistances d'attaque de grille (20, 21), et
dans le second mode, mettre hors tension les commutateurs d'attaque de grille (16, 17) de sorte que le circuit d'attaque (22) met sous tension les commutateurs principaux (1, 2) via les secondes résistances d'attaque de grille (20, 21).
